# EUROPEAN PATENT SPECIFICATION

(11) **EP 2 884 797 B1**
(45) Date of publication and mention of the grant of the patent: **07.02.2018**
(21) Application number: 13306708.2
(22) Date of filing: 12.12.2013
(51) Int. Cl.: H04W 28/22, H04W 16/02, H04W 16/32, H04W 84/04, H04W 92/14

(54) **APPARATUSES AND METHODS FOR A BACKHAUL NODE OF A WIRELESS COMMUNICATION SYSTEM**
VORRICHTUNGEN UND VERFAHREN FÜR EINEN BACKHAUL-KNOTEN IN EINEM DRAHTLOSEN KOMMUNIKATIONSSYSTEM
PROCÉDÉ ET APPAREIL POUR LA COMMANDE D'UN NOEUD DE RÉSEAU D'ACCÈS DANS UN SYSTÈME DE COMMUNICATION SANS FIL

(43) Date of publication of application: 17.06.2015
(73) Proprietor: ALCATEL LUCENT, 92100 Boulogne-Billancourt (FR)
(72) Inventor: Wich, Andreas, 70435 Stuttgart (DE)
(74) Representative: Menzietti, Domenico

(56) References cited:
- WO-A1-2012/068421
- US-A1- 2008 130 495
- US-A1- 2010 323 735
- US-B1- 8 340 625

## Description

Embodiments of the present invention relate to communication systems and, in particular, to wireless communication systems.

### Background

This section introduces aspects that may be helpful in facilitating a better understanding of the inventions. Accordingly, the statements of this section are to be read in this light and are not to be understood as admissions about what is in the prior art or what is not in the prior art.

Continuing demand for wireless communication systems is promoted by a variety of network-enabled mobile terminal devices. This demand is increasing the need for more network capacity and connectivity. To support the growth in data traffic, cellular networks are evolving to include a mix of denser, higher capacity small cells, including for example Carrier Wi-Fi®, deployed at street level on light poles and the sides of buildings. Outdoor small cells may complement a macrocell network by in-filling coverage gaps. They can serve the role of maximizing spectral resources. By moving Radio Frequency (RF) sources closer to subscribers, thereby reducing the number of subscribers sharing the same spectrum, the subscriber/density ratio may be reduced, resulting in higher average mobile capacities per subscriber.

Hence, small cells that are deployed in larger macro radio access networks may be seen as a promising solution for increasing capacity of mobile radio networks. Therefore increases in the deployment of outdoor small cells are forecasted. With orders of magnitude more small cells deployed than macrocells, the backhaul portion of the network will become a critical challenge. The data rate that is generated on the air interface - which should be large to justify small cell deployment - has to be transported to the core network. Among various possibilities are backhaul over regular Digital Subscriber Line (DSL) and other Internet-Protocol (IP) based communication systems, Fiber or Passive Optical Network (PON) systems and even inband or outband wireless backhaul, including microwave backhaul both Point-to-Point or Point-to-MultiPoint (P2MP).

Concepts for adapting backhaul data rates are disclosed in WO 2012/068421 A1 or US 8 340 625 B1, for example.

### Summary

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

According to a first aspect embodiments provide an apparatus for a backhaul node of a wireless communication system. The backhaul node provides rate restricted backhaul connectivity between a core network and a plurality of small cells of the wireless communication system. The plurality of small cells includes at least a first and a second small cell. The apparatus comprises a module to allocate a first backhaul data rate for the first small cell and to allocate a second backhaul data rate for the second small cell. A sum of the first backhaul data rate and the second backhaul data rate is limited to a rate restriction threshold. The module is configured to set at least one of the first and the second backhaul data rate to zero in response to an observation on a current state of a radio access network including the plurality of small cells. The module is configured to set at least one of the first and the second backhaul data rate to zero if a level of activity of the corresponding first or second small cell falls below an activity threshold.

According to a further aspect embodiments provide a method for a backhaul node of a wireless communication system. The backhaul node provides rate restricted backhaul connectivity between a core network and a plurality of small cells of the wireless communication system. The plurality of small cells comprises at least a first and a second small cell. The method includes allocating a first backhaul data rate for the first small cell and to allocate a second backhaul data rate for the second small cell. A sum of the first backhaul data rate and the second backhaul data rate is limited to a rate restriction threshold. Allocating the backhaul data rates comprises setting at least one of the first and the second backhaul data rate to zero in response to an observation on a current state of a radio access network including the plurality of small cells. Allocating the backhaul data rates comprises setting at least one of the first and the second backhaul data rate to zero if a level of activity of the corresponding first or second small cell falls below an activity threshold.

Some embodiments comprise digital circuitry installed within the apparatus for performing the respective method. Such a digital control circuitry, e.g., a Digital Signal Processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing embodiments of the method or at least one or more steps thereof, when the computer program is executed on a computer or a programmable hardware device.

Embodiments may improve small cell deployment and network operation and also have potential to decrease cost.

### Brief description of the Figures

Some embodiments of apparatuses and/or methods will be described in the following by way of example only, and with reference to the accompanying figures, in which
- Fig. 1: illustrates an embodiment of an apparatus for a backhaul node of a wire-less communication system;
- Fig. 2: illustrates an embodiment of a small cells network with wireless backhaul node;
- Fig. 3: schematically shows an embodiment of a decision entity for rate and service selection;
- Fig. 4: shows a functional architecture of a P2MP provisioning system with network optimization, according to an embodiment;
- Fig. 5: shows an example for a multi-link macro-small cell with P2MP provisioning;
- Fig. 6: shows an overall architecture of an end-to-end access system with P2MP provisioning, according to an embodiment; and
- Fig. 7: illustrates and overview of network bearers including a P2MP backhaul.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Data traffic increases in wireless networks year-on-year. Therefore operators of wireless networks, such as Long-Term Evolution (LTE), for example, are increasingly turning up second and third frequency carriers at more and more of their macrocells, thereby approaching the limits of the spectrum available to them. Operators that have rolled out an initial macro layer of a cellular communication system are already starting to plan for the next level of capacity expansion.

In dense urban areas where data traffic is often increasing most rapidly, finding sufficient real estate to accommodate all equipment required for a macro site at an affordable price while also complying with local environmental regulations is proving increasingly challenging. Various capacity-enhancing techniques will certainly continue to enable operators to squeeze more out of the existing macro networks, but not on a scale sufficient to negate the need for a step-change in Radio Access Network (RAN) buildouts toward 3G and 4G small cells that may also be regarded as public access small cells.

Throughout this specification small cells may be regarded as small base station devices that may form an integral part of a mobile operator's RAN and are therefore accessible to all the operator's subscribers. This may distinguish small cells from so-called femtocells, which may be considered as products used for closed user group applications in home or enterprise networking environments.

Base station products used in building out small cells may support an omnidirectional antenna; may weigh no more than a couple of kilograms; with a typical power output of no more than a one or two watts; and may be able to support up to 25 users, for example.

These characteristics enable these small base station products to be mounted indoor or outdoor at street level on the sides of buildings, lampposts, bus stops and the like.

Small cells may be deployed underneath a macro- or microcell layer in either indoor or outdoor locations to provide extra bandwidth in hotspot areas.

With the strong growth in mobile data, the profile of the backhaul network within the broader end-to-end mobile network has grown substantially. There is a case to be made that the backhaul will be an even more critical component when using public access small cells.

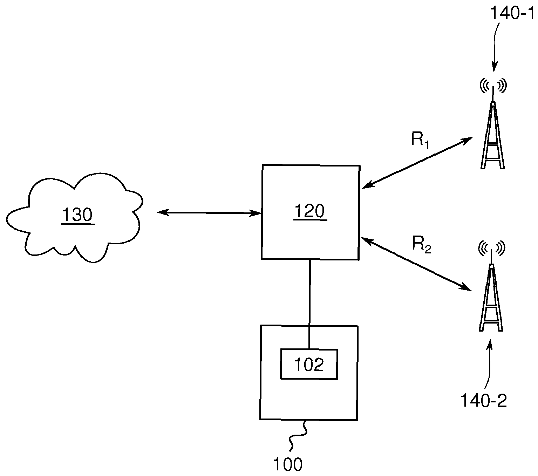

**Fig. 1** illustrates an embodiment of an apparatus 100 for a backhaul node 120 of a wireless communication system.

Note that embodiments of the present invention may be employed in connection with numerous wireless communication systems, such as the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc.

The wireless communication system may comprise a plurality of base stations or cells operable to communicate radio signals with mobile terminals or User Equipment (UE) according to 3GPP terminology. Such cells may be of different size and include, macrocells, microcells, picocells, small cells, and femtocells, for example. Hence, the wireless communication network may be a so-called Heterogeneous Network (HetNet). HetNets may use multiple types of access nodes in a wireless network. A Wide Area Network can use macrocells, picocells, and/or femtocells in order to offer wireless coverage in an environment with a wide variety of wireless coverage zones, ranging from an open outdoor environment to office buildings, homes, and underground areas. Hence, in embodiments a base station may correspond to a remote radio head, a transmission point, an access point, a macrocell, a small cell, a microcell, a picocell, a femtocell, a metrocell etc. In some embodiments the term small cell may refer to any cell smaller than a macro cell. In one or more embodiments a small cell does not have an inter-cell or inter base station interface, such as the X2 interface. That is to say, small cells may communicate with other cells only via their associated backhaul node.

Turning back to Fig. 1, the apparatus 100 may be installed at and/or coupled to the backhaul node 120. The backhaul node 120 provides rate restricted backhaul connectivity between a core network 130 and a plurality of small cells 140 of the wireless communication system. The plurality of small cells 140 includes at least a first small cell 140-1 and a second small cell 140-2. The apparatus 100 comprises an allocation module 102 which is configured to allocate a first backhaul data rate R₁ for the first small cell 140-1 and to allocate a second backhaul data rate R₂ for the second small cell 140-2. The allocation is made under the restriction that the sum of the first backhaul data rate R₁ and the second backhaul data rate R₂ is limited to a rate restriction threshold Rₜₕᵣₑₛ, i.e., R₁ + R₂ ≤ Rₜₕᵣₑₛ. It will be apparent to the skilled person that the apparatus 100, when operating, may perform a corresponding backhaul rate allocation method.

The backhaul node 120 provides backhaul links to the plurality of small cells 140. Therefore the backhaul node 120 may also be referred to Point-to-Multipoint (P2MP) backhaul provision node. Although not limited thereto the backhaul node 120 may in some embodiments be implemented as a wireless backhaul node for providing wireless backhaul connectivity between the core network 130 and the plurality of small cells 140. For example, the backhaul node 120 may be a backhaul base station for establishing wireless backhaul connections to respective base stations serving the small cells 140-1, 140-2. In such cases the backhaul node 120 may provide a wireless RF backhaul link between the respective small cells 140 and the core network 130.

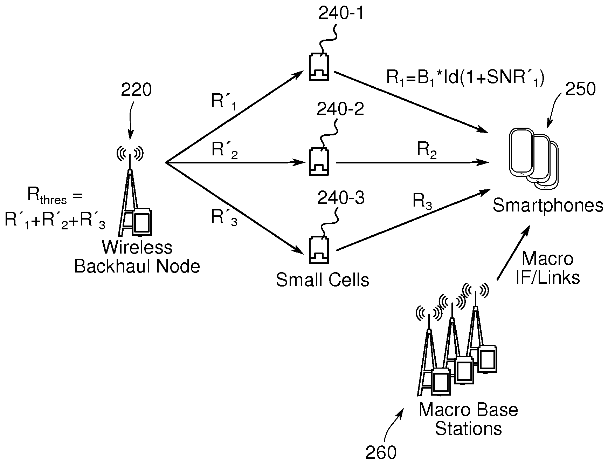

**Fig. 2** illustrates an example where the backhaul node is embodied as a wireless backhaul node 220 for a small cells network 240 with restricted backhaul rate Rₜₕᵣₑₛ. Note, however, that in other embodiments the backhaul node may also use conventional wireline backhaul connections, such as DSL or fibers, for example. However, the extent to which existing fiber points of presence (POPs) can be reused for public access small cells may be limited in practical scenarios.

The wireless backhaul node 220 provides intermediate wireless backhaul links between the core network (not shown) and a plurality of small cells 240-1, 240-2, and 240-3. A first wireless backhaul link between backhaul node 220 and a first small cell base station 240-1 has a first backhaul rate R₁'. A second wireless backhaul link between backhaul node 220 and a second small cell base station 240-2 has a second backhaul rate R₂'. A third wireless backhaul link between backhaul node 220 and a third small cell base station 240-3 has a third backhaul rate R₃'. The sum of the backhaul rates is restricted to Rₜₕᵣₑₛ = R₁' + R₂' + R₃'. The small cells 240-1, 240-2, 240-3 may each provide radio access to the wireless communication system for a plurality of associated user equipment 250, such as laptops, notebooks or smartphones, for example. The small cells 240-1, 240-2, 240-3 may provide radio access for the user equipment 250 with rates R₁, R₂, R₃, wherein Rₙ₌Bₙ*ld(1+SNRₙ) (n= 1, 2, 3). Outside the coverage area of a small cell 240-1, 240-2, 240-3, the user equipment 250 may also access the communication network via macrocells 260. Hence, the network configuration of Fig. 2 may also be referred to as a HetNet including different cell layers.

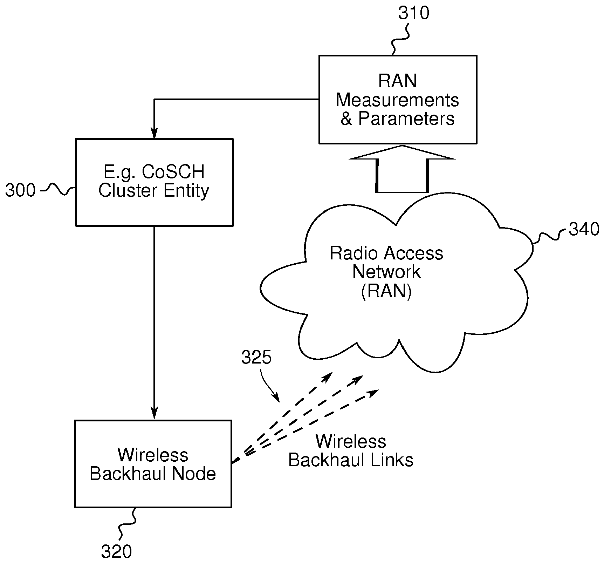

**Fig. 3** shows an abstract view on a possible implementation of an embodiment.

A decision entity 300, for example a Coordinated Scheduling (CoSCH) manager for a plurality of small cells, may get information about a network state and the small cell potential in the network. For that purpose the decision entity 300 may receive RAN measurements and parameters 310 indicative of the state or condition of a RAN 340 including a plurality of small cells and optionally also one or more macrocells. In some embodiments the current network state of RAN 340 may include assigned backhaul data rates for the respective small cells, the load of the respective small cells, backhaul data rate requests of the respective small cells, service requests of the respective small cells, information on transmit cooperation of small cells, etc.

The functionality of the decision entity 300 may correspond to the aforementioned apparatus 100 to allocate backhaul data rates for associated small cells that are served with wireless backhaul links 325 by wireless backhaul node 320. Hence, the decision entity 300 or an allocation module thereof may be configured to allocate the respective backhaul data rates based on an observation on the current state of RAN 340 including the plurality of small cells. Also, the decision entity 300 or an allocation module thereof may be configured to allocate the respective backhaul data rates based on a potential impact of an amended backhaul data rate on the performance of RAN 340.

The decision entity 300 may take decisions on network parameters including the operation of the small cells, taking into account the rate restriction on the P2MP backhaul access. The decisions regarding the operation state of the small cells may be quite challenging and out-of-scope of this specification. However as an example, the following procedure may be considered.

The decision entity 300 or an allocation module may optimize the network state taking into account the small cells and their potential impact on the network 340. Hence, the decision entity 300 may be configured to allocate a backhaul data rate to a respective small cell in order to optimize a current state of the RAN 340 including the plurality of small cells in accordance with an optimization criterion.

Among the information that can be used for cooperation of the RAN 340 and the P2MP backhaul system comprising decision entity 300 and P2MP backhaul node 320 are, for example:
- P2MP provisioning/backhaul rates (average, instantaneous) to the individual small cells;
- Load of the individual small cells;
- Instantaneous rate request or estimated access rate of the individual small cell base stations, for example with respect to diversity and possible small cell buffer states;
- Possible candidate cells for load balancing, including so-called umbrella macros in a dense small cell network, for example;
- Service request / bearers / Quality-of-Service (QoS) classes of the respective connections for the base stations;
- Predictions for the service quality/transmission rate change in case a specific terminal is handled by another cell (e. g. neighboring cell or umbrella cell, inoperative cell)
- Information on (transmit) cooperation between base stations, in order to allow the user data to be transmitted from the P2MP system to the cooperating small cells on the same resources;
- etc.

Hence, the decision entity 300 may try to optimize the network state, e. g. load balancing, in the RAN 340 by taking into account the small cells of RAN 340 and their potential impact on the network. The backhaul system 300, 320 may have several options, ranging from allocating each small cell a smaller backhaul rate, thus limiting the small cell to a smaller capacity on the radio link or restricting or completely shutting down the backhaul rate to a small cell, thereby effectively shutting down the respective small cell. Hence, the decision entity 300 or an allocation module thereof may be configured to set at least one backhaul data rate to zero in response to an observation on a current state of RAN 340 including the plurality of small cells. By preventing a small cell to serve any users, the remaining network - assuming co-channel mode, where all cells share the same frequency resource - may be influenced in a way that may be predetermined and possibly verified afterwards by the decision entity 300.

A small cell's rate restriction may be set very dynamic, dynamic, semi-static or static, depending on the instantaneous network characteristic. A policy may be signaled to the small cell, allowing the decision to be set for such time intervals and a planned reviving of the small cell for reconsideration of its operation. Hence, the decision entity 300 may be configured to allocate at least one backhaul data rate according to a dynamic or static backhaul data rate allocation policy and to signal the backhaul data rate allocation policy to the affected small cell. In case the network experiences a lasting relief from a non-operating small cell, as the small cell has no potential for improving the network situation, said small cell may be turned off for a longer time instance and with it the wireless backhaul link.

The decision for rates on the wireless backhaul links may be taken in a heuristic, trivial way or could be part of an elaborate optimization function taking into account detailed network measurements, prediction and estimations. For instance, a certain level of activity in a small cell would have to be achieved for it to be efficient in the network, so that below this bound no rate would be allocated to the backhaul link thus preventing small cell operation. That is to say, the decision entity 300 may be configured to set a backhaul data rate to zero, if a level of activity of a corresponding small cell falls below an activity threshold. A delta-calculation could be used, calculating the different outcomes of rate allocation and thus small cell activity (and thus network interference) versus the gain if a cell is not used and/or the rate is shifted to a more potent small cell. Finally, learning mechanisms could be leveraged for regression over decision parameters versus measured network outcomes 310.

In some embodiments the decision entity 300 may be regarded as a joint overall scheduler for the wireless P2MP backhaul node 320 and all its connected small cells of RAN 340. In other embodiments there may also be a decentralized approach in that a dedicated resource management for the backhaul node 320 may exchange information with a dedicated resource management of the small cells. For example, respective schedulers may exchange information.

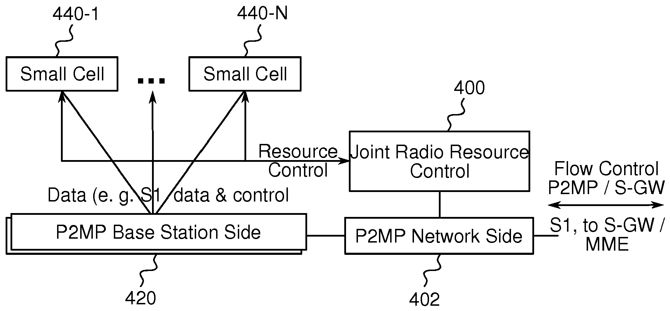

As illustrated in **Fig. 4****,** a joint Radio Resource Control (RRC), scheduler or decision entity 400 can provide a "link" between the network management and a P2MP backhaul provisioning system comprising an allocation module 402 and P2MP wireless backhaul nodes 420. As shown in Fig. 4, it may be beneficial to place at least a part of the RRC, for example in form of allocation module 402 for one or more backhaul nodes 420, on the network side of the P2MP backhaul system, for example, in order to compensate the missing X2 interface between the small cells 440-1, ..., 440-N and/or to allow for cooperative resource control of the small cells 440-1, ..., 440-N. One goal of the P2MP provisioning (backhaul) is to provide a provisioning rate Rₚ to a set of provisioned small cells 440-1, ..., 440-N with backhaul rates R_{s,i}, with the restriction: Rₚ ≥ ΣR_{s,i}. Both Rₚ and the R_{s,i} are bound to have a certain variance.

The interoperation of the resource/network control entity 400 and the provisioning system 402, 420 may be as follows:

In one example, the Joint Radio Resource Controller/Network Management (JRRC/NM) entity 400 may decide that a small cell 440-n (n = 1, ..., N) should cease working for network reasons, for example to improve another cell in operation or because its potential is too small to add benefit to the RAN. Hence, the JRRC/NM entity 400 and/or the allocation module 402 may be configured to set at least one of the backhaul data rates to zero in response to an observation on a current state of a RAN including the plurality of small cells 440-1, ..., 440-N. In particular, the JRRC/NM entity 400 and/or the allocation module 402 may be configured to set a backhaul data rate to zero if a level of activity of a corresponding small cell falls below an activity threshold. A Mobility Management Entity (MME) and/or a Serving Gateway (S-GW) may take appropriate steps to move remaining users out of the small cell 440-n to be shut down and/or prevent admission to this cell. The P2MP system 402, 420 may be triggered to reallocate any remaining resources on the provisioning side (backhaul side) to the remaining small cells or to start operating a previously inoperative small cell. In this context a small cell 440-m may inform the JRRC/NM entity 400 and/or the allocation module 402 to check if it could restart operation and get some backhaul resource if the small cell 440-m (m = 1, ..., N) sees potential for operation. Also, the JRRC/NM entity 400 may trigger the allocation module 402 to resume small cell operation, for example if a macro cell is in an overload situation and if it seems feasible from a network operation perspective.

In another example, the JRRC/NM entity 400 may evaluate the radio access rates of the individual small cells 440-1, ..., 440-N and predict rate changes for small cells in case of e. g. load balancing or interference management and/or CoSch in the RAN. Knowing the restriction posed on sum of access rates by the backhaul system, the JRRC/NM entity 400 may decide to change the operation mode of one or more small cells 440-1, ..., 440-N, leading to a shift in the backhaul provisioning requirements for the cells. For example, a small cell may have to restrict its resources due to interference on a neighbor small cell. The backhaul provisioning system 402, 420 may adapt its provisioning (backhaul), for example the data rate to the individual small cell, accordingly and increase the provisioning (backhaul) of other cells. Hence, the JRRC/NM entity 400 and/or the allocation module 402 may be configured to change, in response to an observation on a current state of a RAN including the plurality of small cells 440-1, ..., 440-N, at least one of the respective assigned backhaul data rates. Also, the backhaul provisioning system may signal to an S-GW/MME entity the requirements or necessary data rates for P2MP - core flow control (instead of base station/RRC - core flow control).

For another example, when the small cells 440-1, ..., 440-N use advanced operation modes, such as Multi-User Multiple-Input Multiple-Output (MU-MIMO), for example, the radio access rates may have a high variance. Since base stations buffers may be small and preferably should not be bloated, the JRRC/NM entity 400 may inform the provisioning system 402, 420 about instantaneous higher rate requirement of some bearers/data streams of a small cell temporarily to be improved. The buffers of other small cells may be filled in time slots where the advanced operation mode is not used, for example when the respective user is not scheduled in the small cell. Alternatively, some small cells may be restricted or switched off (as described before) to allow for the provisioning of the highest-gain cell, or according to a fairness utility.

In case of interoperation in transmission of some small cells on some radio resources, the JRRC/NM entity 400 may inform the provisioning system 402, 420 about data that has to be delivered to more than one small cell, thereby reducing the need to transmit the data multiple times on dedicated resources for the cooperating small cells. Hence, in some embodiments the plurality of small cells 440-1, ..., 440-N may employ coordinated transmission and the backhaul system 402, 420 may be configured to signal data for the coordinated transmission to the plurality of small cells 440-1, ..., 440-N at the same time using the rate restricted backhaul connection. In particular, the backhaul system 402, 420 may be configured to signal data for the coordinated transmission to the plurality of small cells 440-1, ..., 440-N using a common resource of the rate restricted backhaul connection. That is to say, the data to be cooperatively transmitted by more than one small cell may be transmitted over the P2MP backhaul connection on just one backhaul resource. For example, the same data delivered by several SI bearers can be converged in the P2MP provisioning system (e. g. substituting the X2 interface between the base stations), signaling the data for several small cells. The small cells 440-1, ..., 440-N may decode the resources of the P2MP system 402, 420 that carry this data and transmit it cooperatively.

In case a small cell has been put into inoperative mode, a P2MP backhaul interface layer in the inoperative small cell may assure that it can be reactivated in a timely manner, e.g. as soon as a network decision for its operation is taken. This may be achieved by techniques like (time) slotted transmissions in combination with defined control slots and periodical listening of the small cell side P2MP layer to the control bearing slots. Alternatively, a defined control channel could be sent from the P2MP system that has to be received by the small cell P2MP backhaul interface layer.

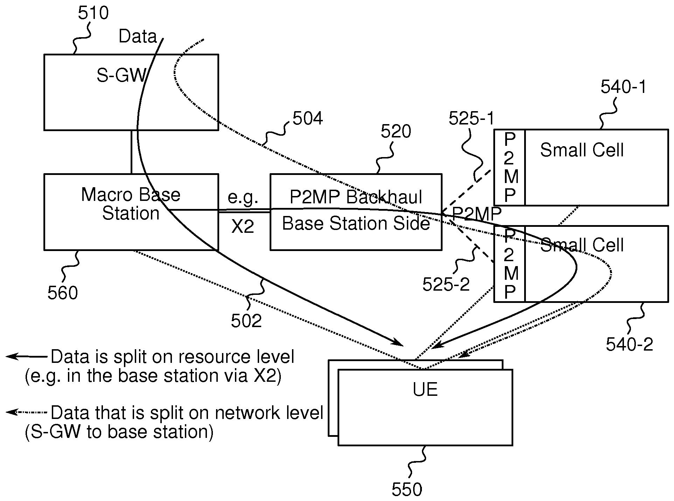

In case of a multi-link system mobile terminals may simultaneously aggregate data from a macro and at least one small cell. This is schematically shown in **Fig. 5**.

The multi-link system 500 includes S-GW 510 coupled to one or more macro base stations 560. The macro base station 560 is coupled to a P2MP backhaul base station 520 via an inter base station interface, for example the X2 interface. The P2MP backhaul base station 520 provides P2MP backhaul links 525-1, 525-2 to small cell base stations 540-1, 540-2. Mobile terminals 550 simultaneously aggregate data via the macro base station 560 (path 502) and at least one small cell base station 540-2 (path 504). The rate restriction on the P2MP backhaul system together with the rate requirements of other provisioned cells and the load of the macro cell 560 may influence the decision on what data to send on over path 504, i.e., the P2MP/small cell access. In embodiments this allocation can be dynamically adapted. For example, this can be done considering bearer QoS requirements (such as guaranteed bitrates, delay, etc.). For a short control loop the multi-link transmission decision can be taken in the macro base station 560 in conjunction with a JRRC/NM entity.

To summarize, an idea underlying embodiments can for example be non-exclusively seen as an extension to a Coordinated Scheduling (CoSch) system. A CoSch optimization function may be extended to restricted backhaul rate transmission points/small cells. A decision entity may allocate rates on the individual links to the small cells, taking into account the effects caused by the operation of the small cell on the radio access network, for example regarding throughput and even energy consumption. Efficient signaling is implemented for nodes not served or turned off in order to periodically update the rate decision, request and requirement.

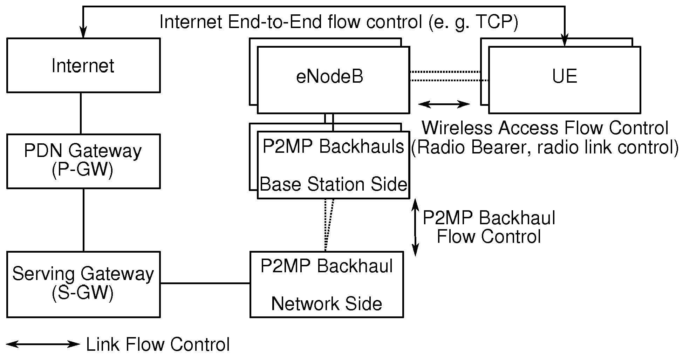

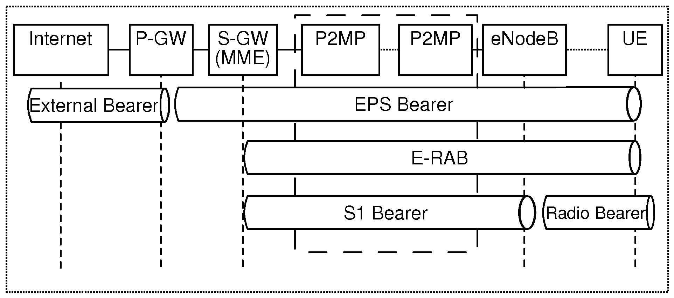

In a Point-to-MultiPoint (P2MP) small cells provisioning system, the provisioning (i.e. the backhaul) - not the access - may pose a restriction on the provisioning (backhaul) data rate. Thus, the P2MP system may handle or at least influence flow control between base stations/small cells and a core network, such as e.g. the Evolved Packet Core (EPC) including Serving Gateway (S-GW), Mobility Management Entity (MME), and Packet Data Network Gateway (P-GW). In some embodiments it is proposed that the EPC, the resource management for the accesses and the P2MP provisioning work together in order to achieve a defined radio access behavior. An example for a generic overall architecture of an end-to-end access system with P2MP (backhaul) provisioning is illustrated in **Fig. 6**. An exemplary flow chart for a variety of network bearers (Evolved Packet switched System (EPS) Bearer, E-UTRAN Radio Access Bearer (E-RAB), S1 Bearer, Radio Bearer) including a P2MP backhaul is illustrated in **Fig. 7**. It can be seen that the EPS bearer and the E-RAB reach a UE via the P2MP backhaul system. The SI bearer from the S-GW reaches the small cell base station (eNodeB) via the P2MP backhaul system. The radio bearer is established between the small cell base station (eNodeB) and an attached UE.

Assuming a wireless backhaul, a large number of small cells may be served by a single backhaul node for cost and efficiency reasons. This includes the necessity of restricting the rates on the individual Wireless Backhaul Node (WBHN) to Small Cell (SC) air interface. Among the parameters to choose is which small cell to serve under which rate, with the addition degree of freedom of potentially improving the overall network in some respect by NOT serving a certain small cell at a given time instance.

Embodiments of may also provide potential for energy savings. If the provisioning or backhaul rate is larger than the sum of rates requested by the small cells "smooth" overprovisioning of the small cells may be performed. For example, the overprovisioning may enable to fill buffers of the small cells. Also, it may allow for a discontinuous backhaul connection (e.g. discontinuous transmission (DTX)) between the backhaul node and the small cells. Here, the wireless backhaul link may temporarily be shut off or muted, leading to energy savings.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "module for s.th." may as well be understood as a "module being adapted or suited for s.th.". A module being adapted for performing a certain function does, hence, not imply that such module necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. Apparatus (100; 300; 400) for a backhaul node (120; 220, 320; 420) of a wireless communication system, the backhaul node providing rate restricted backhaul connectivity between a core network (130) and a plurality of small cells (140; 240; 440) of the wireless communication system, the plurality of small cells (140; 240; 440) comprising at least a first and a second small cell, the apparatus comprising:
a module (102, 402) configured to allocate a first backhaul data rate (R₁) for the first small cell (140-1) and to allocate a second backhaul data rate (R₂) for the second small cell (140-2), wherein a sum of the first backhaul data rate and the second backhaul data rate is limited to a rate restriction threshold,
**characterized in that**
the module (102, 402) is configured to set at least one of the first and the second backhaul data rate to zero in response to an observation on a current state of a radio access network including the plurality of small cells, and
the module (102, 402) is configured to set at least one of the first and the second backhaul data rate to zero if a level of activity of the corresponding first or second small cell falls below an activity threshold.

2. The apparatus (100; 300; 400) of claim 1, wherein a small cell (140; 240; 440) supplements one or more macrocells as a part of the wireless communication system's radio access network (340) and is accessible for any user of the wireless communication system.

3. The apparatus (100; 300; 400) of claim 1, wherein wireless communication system does not provide a direct inter-cell interface between the first small cell (140-1) and the second small cell (140-2).

4. The apparatus (100; 300; 400) of claim 1, wherein the backhaul node (220, 320; 420) provides wireless backhaul connectivity between the core network (130) and the plurality of small cells (140; 240; 440).

5. The apparatus (100; 300; 400) of claim 1, wherein the module (102, 402) is further configured to allocate the first backhaul data rate and/or the second backhaul data rate in response to an observation on a current state of a radio access network including the plurality of small cells and/or in response to a potential impact of an amended first backhaul data rate and/or an amended second backhaul data rate on the radio access network.

6. The apparatus (100; 300; 400) of claim 1, wherein the module (102,402) is further configured to allocate the first backhaul data rate and/or the second backhaul data rate in accordance with an optimization criterion indicative of an optimized state of a radio access network including the plurality of small cells (140; 240; 440).

7. The apparatus (100; 300; 400) of claim 5 or 6, wherein the current state of the radio access network includes at least one of the group of assigned backhaul data rates for the respective small cells, load of the respective small cells, backhaul data rate requests of the respective small cells, service requests of the respective small cells, information on transmit cooperation of small cells.

8. The apparatus (100; 300; 400) of claim 6, wherein the optimization criterion includes a load-balanced state of the radio access network.

9. The apparatus (100; 300; 400) of claim 1, wherein the module (102, 402) is further configured to change, in response to an observation on a current state of a radio access network including the plurality of small cells, at least one of the first and the second backhaul data rate.

10. The apparatus (100; 300; 400) of claim 1, wherein the module (102, 402) is further configured to reactivate an inoperative small cell based on a network decision for its operation.

11. The apparatus (100; 300; 400) of claim 1, wherein the module (102, 402) is further configured to allocate at least one of the first backhaul data rate and the second backhaul data rate according to a dynamic or static backhaul data rate allocation policy and to signal the backhaul data rate allocation policy to the affected small cell.

12. The apparatus (100; 300; 400) of claim 1, wherein the plurality of small cells (140; 240; 440) employ coordinated transmission, and wherein the backhaul node is configured to signal data for the coordinated transmission to the plurality of small cells using a common resource of the rate restricted backhaul connection.

13. Method for a backhaul node (120; 220, 320; 420) of a wireless communication system, the backhaul node providing rate restricted backhaul connectivity between a core network (130) and a plurality of small cells (140; 240; 440) of the wireless communication system, the plurality of small cells (140; 240; 440) comprising at least a first and a second small cell, the apparatus comprising:
allocating a first backhaul data rate (R₁) for the first small cell (140-1) and to allocate a second backhaul data rate (R₂) for the second small cell (140-2), wherein a sum of the first backhaul data rate and the second backhaul data rate is limited to a rate restriction threshold,
**characterized in that**
allocating the backhaul data rates comprises setting at least one of the first and the second backhaul data rate to zero in response to an observation on a current state of a radio access network including the plurality of small cells, and
allocating the backhaul data rates comprises setting at least one of the first and the second backhaul data rate to zero if a level of activity of the corresponding first or second small cell falls below an activity threshold.

14. Computer program having a program code for performing the method of claim 13, when the computer program is executed on a programmable hardware device.

## Patentansprüche

1. Vorrichtung (100; 300; 400) für einen Backhaul-Knoten (120; 220, 320; 420) eines drahtlosen Kommunikationssystems, wobei der Backhaul-Knoten eine ratenbeschränkte Backhaul-Konnektivität zwischen einem Kernnetzwerk (130) und einer Vielzahl kleiner Zellen (140; 240; 440) des drahtlosen Kommunikationssystems bereitstellt, wobei die Vielzahl kleiner Zellen (140; 240; 440) mindestens eine erste und eine zweite kleine Zelle umfasst, wobei die Vorrichtung umfasst:
ein Modul (102, 402), konfiguriert zum Zuweisen einer ersten Backhaul-Datenrate (R₁) für die erste kleine Zelle (140-1) und zum Zuweisen einer zweiten Backhaul-Datenrate (R₂) für die zweite kleine Zelle (140-2), wobei eine Summe der ersten Backhaul-Datenrate und der zweiten Backhaul-Datenrate beschränkt ist auf einen Ratenbeschränkungsschwellenwert,
**dadurch gekennzeichnet, dass** das Modul (102, 402) konfiguriert zum Einstellen mindestens eine der ersten und der zweiten Backhaul-Datenrate auf null als Antwort auf eine Beobachtung eines momentanen Zustands eines Funkzugriffsnetzwerks, das die Vielzahl kleiner Zellen einschließt, und wobei das Modul (102, 402) konfiguriert ist zum Einstellen mindestens einer der ersten und der zweiten Backhaul-Datenrate auf null, wenn eine Aktivitätsstufe der entsprechenden ersten oder zweiten kleinen Zelle unter einen Aktivitätsschwellenwert fällt.

2. Vorrichtung (100; 300; 400) nach Anspruch 1, wobei eine kleine Zelle (140; 240; 440) eine oder mehrere Makrozellen ergänzt als Teil des Funkzugriffsnetzes (340) des drahtlosen Kommunikationssystems und zugreifbar ist für jeden Nutzer des drahtlosen Kommunikationssystems.

3. Vorrichtung (100; 300; 400) nach Anspruch 1, wobei das drahtlose Kommunikationssystem keine direkte interzelluläre Schnittstelle zwischen der ersten kleinen Zelle (140-1) und der zweiten kleinen Zelle (140-2) bereitstellt.

4. Vorrichtung (100; 300; 400) nach Anspruch 1, wobei der Backhaul-Knoten (220, 320; 420) eine drahtlose Backhaul-Konnektivität zwischen dem Kernnetzwerk (130) und der Vielzahl kleiner Zellen (140; 240; 440) bereitstellt.

5. Vorrichtung (100; 300; 400) nach Anspruch 1, wobei das Modul (102, 402) weiterhin konfiguriert ist zum Zuweisen der ersten Backhaul-Datenrate und/oder der zweiten Backhaul-Datenrate als Antwort auf eine Beobachtung eines momentanen Zustands eines Funkzugriffsnetzwerks, das die Vielzahl kleiner Zellen einschließt, und/oder als Antwort auf eine potenzielle Auswirkung auf eine geänderte erste Backhaul-Datenrate und/oder eine erweiterte zweite Backhaul-Datenrate des Funkzugriffsnetzwerks.

6. Vorrichtung (100; 300; 400) nach Anspruch 1, wobei das Modul (102, 402) weiterhin konfiguriert ist zum Zuweisen der ersten Backhaul-Datenrate und/oder der zweiten Backhaul-Datenrate in Einklang mit einem Optimierungskriterium, das indikativ ist für einen optimierten Zustand eines Funkzugriffsnetzwerks, das die Vielzahl kleiner Zellen (140; 240; 440) einschließt.

7. Vorrichtung (100; 300; 400) nach Anspruch 5, oder 6, wobei der momentane Zustand des Funkzugriffsnetzwerks einschließt mindestens eins aus der Gruppe der zugewiesenen Backhaul-Datenraten für die entsprechenden kleinen Zellen, der Last der entsprechenden kleinen Zellen, der Backhaul-Datenraten-Anforderungen der entsprechenden kleinen Zellen, der Dienstanforderungen der entsprechenden kleinen Zellen, Information über die Übertragungskooperation der kleinen Zellen.

8. Vorrichtung (100; 300; 400) nach Anspruch 6, wobei das Optimierungskriterium einschließt einen Lastausgleichszustand des Funkzugriffsnetzwerks.

9. Vorrichtung (100; 300; 400) nach Anspruch 1, wobei das Modul (102, 402) weiterhin konfiguriert ist zum Ändern, als Antwort auf eine Beobachtung eines momentanen Zustands eines Funkzugriffsnetzwerks, das die Vielzahl von kleinen Zellen einschließt, mindestens einer der ersten und der zweiten Backhaul-Datenraten.

10. Vorrichtung (100; 300; 400) nach Anspruch 1, wobei das Modul (102, 402) weiterhin konfiguriert ist zum Reaktivieren einer ruhenden kleinen Zelle auf Grundlage einer Netzwerkentscheidung für ihren Betrieb.

11. Vorrichtung (100; 300; 400) nach Anspruch 1, wobei das Modul (102, 402) weiterhin konfiguriert ist zum Zuweisen mindestens einer der ersten Backhaul-Rate und der zweiten Backhaul-Rate gemäß einer dynamischen oder statischen Backhaul-Datenraten-Zuweisungsrichtlinie und zum Signalisieren der Backhaul-Datenraten-Zuweisungsrichtlinie an die betroffene kleine Zelle.

12. Vorrichtung (100; 300; 400) nach Anspruch 1, wobei die Vielzahl von kleinen Zellen (140; 240; 440) eine koordinierte Übertragung verwendet und wobei der Backhaul-Knoten konfiguriert ist zum Signalisieren von Daten für die koordinierte Übertragung an die Vielzahl von kleinen Zellen unter Verwenden einer gemeinsamen Ressource der ratenbeschränkten Backhaul-Verbindung.

13. Verfahren für einen Backhaul-Knoten (120; 220, 320; 420) eines drahtlosen Kommunikationssystems, wobei der Backhaul-Knoten eine ratenbeschränkte Backhaul-Konnektivität zwischen einem Kernnetzwerk (130) und einer Vielzahl kleiner Zellen (140; 240; 440) des drahtlosen Kommunikationssystems bereitstellt, wobei die Vielzahl kleiner Zellen (140; 240; 440) umfasst mindestens eine erste und eine zweite kleine Zelle, wobei die Vorrichtung umfasst:
Zuweisen einer ersten Backhaul-Datenrate (R₁) für die erste kleine Zelle (140-1) und Zuweisen einer zweiten Backhaul-Datenrate (R₂) für die zweite kleine Zelle (140-2), wobei eine Summe der ersten Backhaul-Datenrate und der zweiten Backhaul-Datenrate beschränkt ist auf einen Ratenbeschränkungsschwellenwert,
**dadurch gekennzeichnet, dass** das Zuweisen der Backhaul-Datenraten umfasst das Einstellen mindestens einer der ersten und der zweiten Backhaul-Datenraten auf null als Antwort auf eine Beobachtung eines momentanen Zustands eines Funkzugriffsnetzwerks, das die Vielzahl kleiner Zellen einschließt, und dass das Zuweisen der Backhaul-Datenraten umfasst das Einstellen mindestens einer der ersten und zweiten Backhaul-Datenraten auf null, wenn eine Aktivitätsstufe der entsprechenden ersten und zweiten kleinen Zellen unter einen Aktivitätsschwellenwert fällt.

14. Computerprogramm, das einen Programmcode aufweist zum Durchführen der Schritte des Verfahrens nach Anspruch 13, wenn das Computerprogramm auf einer programmierbaren Hardwarevorrichtung ausgeführt wird.

## Revendications

1. Appareil (100 ; 300 ; 400) pour un noeud de liaison terrestre (120 ; 220, 320 ; 420) d'un système de communication sans fil, le noeud de liaison terrestre fournissant une connectivité de liaison terrestre à débit limité entre un coeur de réseau (130) et une pluralité de petites cellules (140 ; 240 ; 440) du système de communication sans fil, la pluralité de petites cellules (140 ; 240 ; 440) comprenant au moins une première et une deuxième petites cellules, l'appareil comprenant :
un module (102, 402) configuré pour attribuer un premier débit de données de liaison terrestre (R₁) pour la première petite cellule (140-1) et pour attribuer un deuxième débit de données de liaison terrestre (R₂) pour la deuxième petite cellule (140-2), dans lequel une somme du premier débit de données de liaison terrestre et du deuxième débit de données de liaison terrestre est limitée à un seuil de restriction du débit,
**caractérisé en ce que**
le module (102, 402) est configuré pour régler le premier et/ou le deuxième débit(s) de données de liaison terrestre sur zéro en réponse à une observation sur un état actuel d'un réseau d'accès radio comprenant la pluralité de petites cellules, et
le module (102, 402) est configuré pour régler le premier et/ou le deuxième débit(s) de données de liaison terrestre sur zéro si un niveau d'activité de la première ou de la deuxième petite cellule correspondante descend en dessous d'un seuil d'activité.

2. Appareil (100 ; 300 ; 400) selon la revendication 1, dans lequel une petite cellule (140 ; 240 ; 440) complète une ou plusieurs macrocellules en tant que partie d'un réseau d'accès radio (340) du système de communication sans fil et tout utilisateur du système de communication sans fil peut y accéder.

3. Appareil (100 ; 300 ; 400) selon la revendication 1, dans lequel le système de communication sans fil ne fournit pas une interface intercellulaire directe entre la première petite cellule (140-1) et la deuxième petite cellule (140-2).

4. Appareil (100 ; 300 ; 400) selon la revendication 1, dans lequel le noeud de liaison terrestre (220, 320 ; 420) fournit une connectivité de liaison terrestre sans fil entre le coeur de réseau (130) et la pluralité de petites cellules (140 ; 240 ; 440).

5. Appareil (100 ; 300 ; 400) selon la revendication 1, dans lequel le module (102, 402) est en outre configuré pour attribuer le premier débit de données de liaison terrestre et/ou le deuxième débit de données de liaison terrestre en réponse à une observation sur un état actuel d'un réseau d'accès radio comprenant la pluralité de petites cellules et/ou en réponse à un impact potentiel d'un premier débit de données de liaison terrestre modifié et/ou d'un deuxième débit de données de liaison terrestre modifié sur le réseau d'accès radio.

6. Appareil (100 ; 300 ; 400) selon la revendication 1, dans lequel le module (102, 402) est en outre configuré pour attribuer le premier débit de données de liaison terrestre et/ou le deuxième débit de données de liaison terrestre conformément à un critère d'optimisation indiquant un état optimisé d'un réseau d'accès radio comprenant la pluralité de petites cellules (140 ; 240 ; 440).

7. Appareil (100 ; 300 ; 400) selon la revendication 5 ou 6, dans lequel l'état actuel du réseau d'accès radio comprend au moins des débits de données de liaison terrestre attribués pour les petites cellules respectives, et/ou une charge des petites cellules respectives, et/ou des demandes de débit de données de liaison terrestre des petites cellules respectives, et/ou des demandes de service des petites cellules respectives, et/ou des informations sur la coopération de transmission des petites cellules.

8. Appareil (100; 300 ; 400) selon la revendication 6, dans lequel le critère d'optimisation comprend un état équilibré en charge du réseau d'accès radio.

9. Appareil (100 ; 300 ; 400) selon la revendication 1, dans lequel le module (102, 402) est en outre configuré pour changer, en réponse à une observation sur un état actuel d'un réseau d'accès radio comprenant la pluralité de petites cellules, le premier et/ou le deuxième débit(s) de données de liaison terrestre.

10. Appareil (100 ; 300 ; 400) selon la revendication 1, dans lequel le module (102, 402) est en outre configuré pour réactiver une petite cellule inopérante sur la base d'une décision du réseau pour son fonctionnement.

11. Appareil (100 ; 300 ; 400) selon la revendication 1, dans lequel le module (102, 402) est en outre configuré pour attribuer le premier et/ou le deuxième débit(s) de données de liaison terrestre conformément à une politique d'attribution de débit de données de liaison terrestre dynamique ou statique et pour signaler la politique d'attribution de débit de données de liaison terrestre à la petite cellule affectée.

12. Appareil (100; 300 ; 400) selon la revendication 1, dans lequel la pluralité de petites cellules (140 ; 240 ; 440) utilisent une transmission coordonnée, et dans lequel le noeud de liaison terrestre est configuré pour signaler des données pour la transmission coordonnée à la pluralité de petites cellules en utilisant une ressource commune de la connexion de liaison terrestre à débit limité.

13. Procédé pour un noeud de liaison terrestre (120 ; 220, 320 ; 420) d'un système de communication sans fil, le noeud de liaison terrestre fournissant une connectivité de liaison terrestre à débit limité entre un coeur de réseau (130) et une pluralité de petites cellules (140 ; 240 ; 440) du système de communication sans fil, la pluralité de petites cellules (140 ; 240 ; 440) comprenant au moins une première et une deuxième petites cellules, l'appareil comprenant l'étape suivante :
attribuer un premier débit de données de liaison terrestre (R₁) pour la première petite cellule (140-1) et pour attribuer un deuxième débit de données de liaison terrestre (R₂) pour la deuxième petite cellule (140-2), dans lequel une somme du premier débit de données de liaison terrestre et du deuxième débit de données de liaison terrestre est limitée à un seuil de restriction du débit,
**caractérisé en ce que**
l'attribution des débits de données de liaison terrestre comprend le réglage du premier et/ou du deuxième débit(s) de données de liaison terrestre sur zéro en réponse à une observation sur un état actuel d'un réseau d'accès radio comprenant la pluralité de petites cellules, et
l'attribution des débits de données de liaison terrestre comprend le réglage du premier et/ou du deuxième débit(s) de données de liaison terrestre sur zéro si un niveau d'activité de la première ou de la deuxième petite cellule correspondante descend en dessous d'un seuil d'activité.

14. Programme informatique possédant un code de programme pour exécuter le procédé selon la revendication 13, lorsque le programme informatique est exécuté sur un dispositif matériel programmable.
